(19) Europäisches Patentamt
European Patent Office
Office européen des brevets

(11) EP 1 593 696 B1

(12) EUROPEAN PATENT SPECIFICATION

(45) Date of publication and mention of the grant of the patent:
**17.08.2011 Bulletin 2011/33**

(51) Int Cl.:
***C08F 10/02*** *(2006.01)* ***B65D 1/00*** *(2006.01)*

(21) Application number: **05105335.3**

(22) Date of filing: **28.03.2001**

(54) **Metallocene-produced polyethylene for glossy plastic containers**

Metallocen-Polyethylen für glänzende Plastikbehälter

Polyéthylène métallocénique pour recipients en plastique brillants

(84) Designated Contracting States:
**AT BE CH CY DE DK ES FI FR GB GR IE IT LI LU MC NL PT SE TR**

(30) Priority: **30.03.2000 EP 00201154**

(43) Date of publication of application:
**09.11.2005 Bulletin 2005/45**

(62) Document number(s) of the earlier application(s) in accordance with Art. 76 EPC:
**01927822.5 / 1 268 576**

(73) Proprietor: **TOTAL PETROCHEMICALS RESEARCH FELUY**
**7181 Seneffe (Feluy) (BE)**

(72) Inventor: **Maziers, Eric**
**B-7180, Seneffe (BE)**

(56) References cited:
**WO-A-00/40625**
**WO-A-96/19527**
**WO-A-99/26783**
**US-A- 5 629 253**
**US-A- 5 788 926**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

This invention is related to plastic containers having a glossy outer surface and in particular to the production high gloss bottles, jars, etc. formed of polyethylene.

Several methods have been sought to produce high gloss bottles presenting good processability and good mechanical properties but all the blends and techniques used so far present various disadvantages.

High gloss high density polyethylene (HDPE) has been used: it is characterised by a very narrow molecular weight distribution that is typically inferior to 8. The molecular weight distribution can be completely defined by means of a curve obtained by gel permeation chromatography. Generally, the molecular weight distribution (MWD) is more simply defined by a parameter, known as the dispersion index D, which is the ratio between the average molecular weight by weight (Mw) and the average molecular weight by number (Mn). The dispersion index constitutes a measure of the width of the molecular weight distribution. It is known that a resin of narrow molecular weight distribution will produce plastic containers of very high gloss but simultaneously, that such resin will be very difficult to process and will be characterised by very poor mechanical properties. It has also been observed that said resins have poor mechanical properties, particularly, a very low environmental stress crack resistance (Modern Plastic International, August 1993, p. 45).

The coextrusion of high density polyethylene (HDPE) with a thin external layer of polyamide has been used to produce bottles of very high gloss but that method suffers the major drawback of necessitating an adhesive layer between the HDPE and the polyamide layers.

The coextrusion of high density polyethylene and an external layer of low density polyethylene leads to bottles with a fair gloss. These bottles however have an unpleasant greasy touch and offer a very poor resistance to scratching.

Metallocene-catalysed polyolefins have been used in transparent multilayer films suitable for packaging, for example in EP-A-756,931, WO-98-32601, WO-99-10430, WO-95-21743, WO-97-02294. None of these prior art documents has addressed the problem of this invention: the production of plastic container having a glossy outer surface.

In another method, disclosed in co-pending patent application, high gloss plastic containers comprise an internal layer including a polyolefin and an external layer including a styrenic component containing from 40 to 85 wt% of styrene, based on the weight of the external layer.

US 5,788,926 discloses a resin having a melt index of 0.1 to 2 dg/min. The densities of examples 1 and 2 are respectively of 0.956 and 0.948 g/cc. WO-96-19527 discloses in example 2 a resin that has a density of 0.951 g/cc and a MI2 of 0.78 dg/min. It is used to prepare a glossy film.

There is thus a need for a method for efficiently producing plastic containers such as bottles of very high gloss as well as good processability and mechanical properties.

An aim of the present invention is to produce plastic containers that offer simultaneously the desired glossy appearance, a good resistance to scratching and very low swell.

It is also an aim of the present invention to obtain glossy plastic containers with good processability and good mechanical properties.

The present invention provides a multi-layer bottle wherein the external layer is prepared essentially from a polyethylene resin produced with a metallocene catalyst component, said external layer having a gloss of at least 40, and wherein the internal layer is prepared with a metallocene catalyst system that is the same as or different from that of the external layer, wherein the polyethylene resin of the external layer has a density of from 0.930 to 0.966 g/cm$^3$ and a melt index MI2 of from 0.5 to 2.5 g/10min.

In this specification, the density of the polyethylene is measured at 23°C using the procedures of ASTM D 1505.

The melt index MI2 is measured using the procedures of ASTM D 1238 at 190°C using a load of 2.16 kg. The high load melt index HLMI is measured using the procedures of ASTM D 1238 at 190°C using a load of 21.6 kg.

In the multi-layer bottle of the invention, the external layer is prepared with a metallocene-produced polyethylene resin, the inner layer(s) is(are) prepared with a metallocene catalyst, said metallocene catalyst being either the same as or different from the metallocene catalyst used to prepare the external layer.

A number of different catalyst systems have been disclosed for the manufacture of polyethylene, in particular medium-density polyethylene (MDPE) and high-density polyethylene (HDPE) suitable for blow moulding. It is known in the art that the physical properties, in particular the mechanical properties, of a polyethylene product vary depending on what catalytic system was employed to make the polyethylene. This is because different catalyst systems tend to yield different molecular weight distributions in the polyethylene produced

The HDPE can be polymerised with a metallocene catalyst capable of producing a mono- or bi- or multimodal distribution, either in a two step process such as described for example in EP-A-0,881,237, or as a dual or multiple site catalyst in a single reactor such as described for example in EP-A-0,619,325.

Any metallocene catalyst known in the art can be used in the present invention. It is represented by the general formula:

I. $(Cp)_m MR_n Xq$

wherein Cp is a cyclopentadienyl ring, M is a group 4b, 5b or 6b transition metal, R is a hydrocarbyl group or hydrocarboxy having from 1 to 20 carbon atoms, X is a halogen, and m-1-3, n=0-3, q=0-3 and the sum m+n+q is equal to the oxidation state of the metal.

II. $(C_5R'_k)_g R''_s (C_5R'_k) MQ_{3-g}$

III. $R''_s (C_5R'_k)_2 MQ'$

wherein $(C_5R'_k)$ is a cyclopentadienyl or substituted cyclopentadienyl, each R' is the same or different and is hydrogen or a hydrocarbyl radical such as alkyl, alkenyl, aryl, alkylaryl, or arylalkyl radical containing from 1 to 20 carbon atoms or two carbon atoms are joined together to form a $C_4$-$C_6$ ring, R" is a $C_1$-$C_4$ alkylene radical, a dialkyl germanium or silicon or siloxane, or a alkyl phosphine or amine radical bridging two $(C_5R'_k)$ rings, Q is a hydrocarbyl radical such as aryl, alkyl, alkenyl, alkylaryl, or aryl alkyl radical having from 1-20 carbon atoms, hydrocarboxy radical having 1-20 carbon atoms or halogen and can be the same or different from each other, Q' is an alkylidene radical having from 1 to about 20 carbon atoms, s is 0 or 1, g is 0, 1 or 2, s is 0 when g is 0, k is 4 when s is 1 and k is 5 when s is 0, and M is as defined above.

Among the preferred metallocenes used in the present invention, one can cite among others ethylene bis-(tetrahydroindenyl) zirconium dichloride and ethylene bis-(indenyl) zirconium dichloride as disclosed for example in WO 96/35729.

The metallocene may be supported according to any method known in the art. In the event it is supported, the support used in the present invention can be any organic or inorganic solids, particularly porous supports such as talc, inorganic oxides, and resinous support material such as polyolefin. Preferably, the support material is an inorganic oxide in its finely divided form.

An active site must be created by adding a cocatalyst having an ionising action.

Preferably, alumoxane is used as cocatalyst during the polymerization procedure, and any alumoxane known in the art is suitable.

The preferred alumoxanes comprise oligomeric linear and/or cyclic alkyl alumoxanes represented by the formula :

(IV) 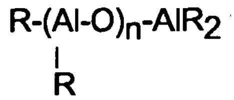

for oligomeric, linear alumoxanes
and

(V) 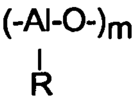

for oligomeric, cyclic alumoxanes,
wherein n is 1-40, preferably 10-20, m is 3-40, preferably 3-20 and R is a $C_1$-$C_8$ alkyl group and preferably methyl.
Methylalumoxane is preferably used.

When alumoxane is not used as a cocatalyst, one or more aluminiumalkyl represented by the formula $AlR_x$ are used wherein each R is the same or different and is selected from halides or from alkoxy or alkyl groups having from 1 to 12 carbon atoms and x is from 1 to 3. Especially suitable aluminiumalkyl are trialkylaluminium, the most preferred being triisobutylaluminium (TIBAL).

The metallocene catalyst utilised to produce a polyethylene, as required for preparing the high gloss plastic containers of the present invention, can be used in gas, solution or slurry polymerisation. Preferably, the polymerization process is conducted under slurry phase polymerization conditions. The polymerisation temperature ranges from 20 to 125°C, preferably from 60 to 95°C and the pressure ranges from 0.1 to 5.6 Mpa, preferably from 2 to 4 Mpa, for a time ranging from 10 minutes to 4 hours, preferably from 1 and 2.5 hours).

It is preferred that the polymerization reaction be run in a diluent at a temperature at which the polymer remains

as a suspended solid in the diluent.

A continuous loop reactor is preferably used for conducting the polymerisation.

The average molecular weight is controlled by adding hydrogen during polymerisation. The relative amounts of hydrogen and olefin introduced into the polymerisation reactor are from 0.001 to 15 mole percent hydrogen and from 99.999 to 85 mole percent olefin based on total hydrogen and olefin present, preferably from 0.2 to 3 mole percent hydrogen and from 99.8 to 97 mole percent olefin.

The density of the polyethylene is regulated by the amount of comonomer injected into the reactor; examples of comonomer which can be used include 1-olefins butene, hexene, octene, 4-methyl-pentene, and the like, the most preferred being hexene.

The densities of the polyethylenes required for preparing the plastic containers of the present invention range from 0.930 $g/cm^3$ to 0.966 $g/cm^3$.

The melt index of polyethylene is regulated by the amount of hydrogen injected into the reactor. The melt indexes useful in the present invention range from 0.5 g/10' to 2.5 g/10'.

The polyethylene resin used in the present invention can be prepared with either a single site metallocene catalyst or with a multiple site metallocene catalyst and it has therefore either a monomodal or a bimodal molecular weight distribution. The molecular weight distribution is of from 2 to 20, preferably, of from 2 to 7 and more preferably of from 2 to 5.

The polyethylene resins produced in accordance with the above-described processes have physical properties making them particularly suitable for use as blow moulding grade polyethylenes. In addition, it has surprisingly been observed that they have good processability even when their molecular weight distribution is narrow.

The polyethylene resins of the present invention are used preferably for producing containers of a capacity ranging from 0.005 to 5 l. They are more preferably used for producing food packaging, particularly milk bottles and juice bottles, cosmetic packaging and household packaging such as detergent packaging.

The blow moulding machine, incorporating a coextrusion die for extruding a parison to be blow moulded, can be any one of the machines generally used for blow moulding. The following have been used for processing the polyethylene:

- a Battenfeld Fisher VK1-4 available from Battenfeld : this is a continuous extrusion or co-extrusion blow moulding machine with up to 6 extruders for the production of polyethylene bottles of 0.5 litre capacity, the bottles comprising multi-layers with up to 6 layers;
- a high productivity wheel configuration machine with 6 cavities for continuous extrusion.

The plastic containers of the present invention are characterised by a very high gloss, as measured using the ASTM D 2457-90 test, a low haze as measured by ASTM D 1003-92, a very low swell and a outstanding resistance to drop.

The swell is measured with the Gottfert 2002 capillary rheometer: it measures the diameter of the extruded product for different shear velocities. The capillary selection corresponds to a die having an effective length of 10 mm, a diameter of 2 mm and an aperture of 180 °. The temperature is 210 °C. Shear velocities range from 7 to 725 $sec^{-1}$, selected in decreasing order in order to reduce the time spent in the cylinder; 7 velocities are usually tested. When the extruded product has a length of about 7cm, it is cut, after the pressure has been stabilised and the next velocity is selected. The extruded product (sample) is allowed to cool down in a rectilinear position.

The diameter of the extruded product is then measured with an accuracy of 0.01 mm using a vernier, at 2.5 cm ($d_{2.5}$) and at 5 cm ($d_5$) from one end of the sample, making at each position $d_{2.5}$ and $d_5$ two measurements separated by an angle of 90 °.

The diameter do at the one end of the sample selected for the test is extrapolated:

$$d_0 = d_{2.5} + (d_{2.5} - d_5)$$

The swell G is determined as

$$G = 100 \times (d_0 . d_f)/ d_f$$

wherein $d_f$ is the die diameter.

The test is carried out only on the samples that are free of melt fracture.

The swell value is measured for each of the selected shear velocities and a graph representing the swell as a

function of shear velocity can be obtained.

The drop resistance test is performed on one-litre bottles prepared in accordance with the present invention. The drop resistance is measured using the following procedure:

A. Preparation of the equipment and bottles:

- the die and pin of the blow moulding equipment was cleaned on the day of production of the bottles;
- the bottles had a fairly homogeneous thickness;
- the net weight of bottles was 0.8 kg
- the empty bottles were stored at room temperature for about 20 hrs;
- the bottles were then filled with fluid, closed and brought to the desired conditioning as follows:

  1) room temperature, water, 24 +- 3 hrs;
  2) -18 °C, water + anti-freeze, 24 +- 3 hrs;

B. A test run on a sample of 20 bottles included the following steps:

- definition of the zero height;
- selection of a starting height for the drop test;
- selection of a homogeneous step distance in order to ensure the use of at least three different heights for each bottle tested;
- rejection of the test if the impact was equivocal or if the cap was leaky;
- recording of the result in a grid shown in Table I;
- modification of the height by subtracting or adding one step distance depending upon whether the bottle broke or not;
- after 14 bottles were tested,

  1) the test was interrupted if the number of ruptures N=7;
  2) the test was continued until N=7, if N was <7;
  3) the test was continued until the number of non-ruptures is 7, if N was >7

- the calculation of the height of rupture $H_F$ was then given by the formula

$$H_F = H_0 + [\,\Delta H \;(A/N - 0.5)\,]$$

wherein

- $H_0$ is the minimum height,
- $\Delta H$ is the step distance,
- A is given by the product ($i * n_l$) wherein $n_i$ represents the number of ruptures at each height considering only the last 7 ruptures and i is an integer 0,1,2,.. indicating the number of steps above the minimum height $H_0$,
- N is the total number of ruptures.

In all the tests performed either on the resins of the present invention or on the comparative resins, the bottles were dropped from a maximum height of 6.5 m. No ruptures occurred ($n_l = 0$ and $i * n_l = 0$).

On the VK1-4 machine, it is possible to incorporate fluoroelastomer in the resin allowing for very low transformation temperatures of from 140 to 180 °C, preferably, around 160 °C. These temperatures are 30 to 40 °C lower than the transformation temperature normally used.

The typical weight of the container can be reduced by as much as 50 % if so desired.

It is also possible to produce coextruded plastic containers wherein the external layer is a metallocene-produced polyethylene and the internal layer is a polyethylene produced by any conventional method. The external layer represents from 5 to 14 %, preferably about 10 %, of the total wall thickness.

On the wheel machine, the transformation temperatures are higher than on the VK1-4 machine, they range from 170 to 190 °C.

Additionally and quite surprisingly, the production rate is very high even though the melt index is low.

**Examples.**

Several polyethylene resins were prepared and tested for swell, gloss, haze and drop.

Resins R1 and R2.

They are monomodal polyethylene resins produced with a chromium catalyst. Resin R1, commercialised under the name Finathène SR572, was prepared with a titanated supported chromium catalyst and resin R2, commercialised under the name Finathène 5502 was prepared with a supported chromium catalyst

Resin R3.

This is a bimodal polyethylene resin that was prepared with a conventional Ziegler-Natta catalyst.

Resin R4.

The polyethylene resin was obtained by continuous polymerisation in a loop slurry reactor with a supported and ionised metallocene catalyst prepared in two steps by first reacting $SiO_2$ with MAO to produce $SiO_2$.MAO and then reacting 94 wt% of the $SiO_2$.MAO produced in the first step with 6 wt% of ethylene bis-(tetrahydroindenyl) zirconium dichloride. The dry catalyst was slurried in isobutane and pre-contacted with triisobutylaluminium (TiBAl, 10 wt% in hexane) before injection in the reactor. The reaction was conducted in a 70 l capacity loop reactor during ? hour with the polymerisation temperature being maintained at 85 °C,. The operating conditions are summarised in Table I.

Resin R5.

The polyethylene resin was obtained by continuous polymerisation in a loop slurry reactor with a supported and ionised metallocene catalyst prepared in two steps by first reacting $SiO_2$ with MAO to produce $SiO_2$.MAO and then reacting 96 wt% of the $SiO_2$.MAO produced in the first step with 4 wt% of ethylene bis-(indenyl) zirconium. The dry catalyst was slurried in isobutane and pre-contacted with triisobutylaluminium (TiBAl, 10 wt% in hexane) before injection in the reactor. The reaction was conducted in a 70 l capacity loop reactor during ? hour with the polymerisation temperature being maintained at 90 °C. The operating conditions are summarised in Table I.

TABLE I.

| Resin | Pol. Temp. °C | TiBAl $cm^3/h$ | iC4 kg/h | C2 Kg/h | C6 $cm^3/h$ | H2 Nl/h |
|---|---|---|---|---|---|---|
| R4 | 90 | 120 | 26 | 9 | 50 | 1.2 |
| R5 | 85 | 140 | 26 | 10 | 760 | 4.0 |

All these resins were prepared with hexene as comonomer.

The properties of these resins are summarised in Table II.

**TABLE II.**

| Resin | Density $g/cm^3$ | HLMI g/10' | MI2 g/10' | Mn | Mw | Mz | MWD |
|---|---|---|---|---|---|---|---|
| R4 | 0.934 | 25.1 | 0.96 | 34083 | 88134 | 167888 | 2.6 |
| R5 | 0.951 | 30.8 | 0.63 | 29037 | 134438 | 520624 | 4.6 |
| R1 | 0.955 | 20 | 0.18 | 16222 | 212677 | 2198839 | 13.1 |
| R2 | 0.953 | 17.65 | 0.19 | 19620 | 153558 | 1333100 | 7.8 |
| R3 | 0.959 | 18.7 | 0.19 | 12100 | 214000 | 1528000 | 17.7 |

These five resins were extruded or coextruded with the VK-14 Battenfeld extruder or with the wheel configuration extruder under conditions summarised in Tables III and IV respectively. The die was 10 mm for all examples. The properties of the extruded articles so produced are also described in Tables III and IV.

**TABLE III.**

| Resin | Processing Temp. | Bottle weight | Int. gloss | Ext. gloss | Haze |
|---|---|---|---|---|---|
| | °C | g | % | % | % |
| R4 | 155 | 65 | 45 | 37 | 49 |
| R4 | 155 | 30 | 51 | 44 | 40 |
| R1 | 200 | 65 | 8.4 | 9.1 | 64 |

During processing, resin R4 showed very low swell and a transparent parison. The bottles obtained were very glossy and transparent as compared to those obtained with resin R1, R2 and R3.

TABLE IV.

| Resin | Process. Temp | Amper. | RPM[1] | Die gap | Product. rate | Bottle weight | Swell in diam. |
|---|---|---|---|---|---|---|---|
| | °C | A | | mm | Nb*/min | g | Mm |
| R1 | 215 | 53 | 34 | 2.05 | 26 | 45 | 50 |
| R2 | 190 | 53 | 34 | 2.05 | 28 | 41 | 47 |
| R3 | 170 | 45 | 32 | 2.05 | 40 | 31 | 41 |
| R4 | 205 | 45 | 30 | 2.05 | 40 | 28 | 38 |
| R5 | 215 | 48 | 43 | 2.05 | 44 | 22 | 34 |
| R4 | 190 | 55 | 56 | 2.71 | 40 | 39 | 41 |

RPM[1] is the number of rotations per minute.
Nb/min is the number of bottles produced per minute
All the bottles produced from resins R4 and R5 had a very high gloss and it was observed that adjusting the equipment accordingly could have increased the rate of production.

## Claims

1. A multi-layer bottle wherein the external layer is prepared essentially from a polyethylene resin produced with a metallocene catalyst component, said external layer having a gloss of at least 40, and wherein the internal layer is prepared with a metallocene catalyst system that is the same as or different from that of the external layer, wherein the polyethylene resin of the external layer has a density of from 0.930 to 0.966 g/cm$^3$ and a melt index MI2 of from 0.5 to 2.5 g/10min.

2. The bottle according to claim 1 wherein the metallocene catalyst system used to prepare the external layer is based on an ethylene-bisindenyl or an ethylene-bistetrahydroindenyl zirconium dichloride catalyst component.

3. The bottle according to any one of claims 1 to 2, wherein the polyethylene resin of the external layer has a molecular weight distribution of from 2 to 7.

4. The bottle according to any one of the preceding claims that is produced by blow moulding an extruded or coextruded parison.

5. The bottle according to any one of the preceding claims, wherein each layer is the same or different.

6. The bottle according to any one of the preceding claims wherein both the external and internal layers are produced with an ethylene-bisindenyl or an ethylene-bistetrahydroindenyl zirconium dichloride metallocene catalyst component.

7. Milk bottles according to any one of the preceding claims.

8. Cosmetic packaging according to any one of claims 1 to 6.

9. Household packaging according to any one of claims 1 to 6.

## Patentansprüche

1. Mehrschichtige Flasche, wobei die äußere Schicht im Wesentlichen aus einem Polyethylenharz hergestellt ist, produziert mit einer Metallocen-Katalysatorkomponente, wobei die äußere Schicht einen Glanzwert von zumindest 40 aufweist, und wobei die innere Schicht mit einem Metallocen-Katalysatorsystem hergestellt ist, das das gleiche wie jenes der äußeren Schicht ist oder sich von diesem unterscheidet, wobei das Polyethylenharz der äußeren Schicht eine Dichte von 0,930 bis 0,966 g/$cm^3$ und einen Schmelzindex MI2 von 0,5 bis 2,5 g/10 Minuten aufweist.

2. Flasche nach Anspruch 1, wobei die Metallocen-Katalysatorkomponente, die zur Herstellung der äußeren Schicht verwendet wird, auf einer Ethylen-bisindenyl- oder einer Ethylen-bistetrahydroindenyl-zirkoniumdichlorid-Katalysatorkomponente basiert.

3. Flasche nach einem der Ansprüche 1 bis 2, wobei das Polyethylenharz der äußeren Schicht eine Molekulargewichtsverteilung von 2 bis 7 aufweist.

4. Flasche nach einem der vorhergehenden Ansprüche, die durch Blasformen eines extrudierten oder coextrudierten Vorformlings hergestellt ist.

5. Flasche nach einem der vorherigen Ansprüche, wobei jede Schicht gleich oder unterschiedlich ist.

6. Flasche nach einem der vorherigen Ansprüche, wobei sowohl die äußere als auch die innere Schicht mit einer Ethylen-bisindenyl- oder einer Ethylen-bistetrahydroindenyl-zirkoniumdichlorid-Metallocen-Katalysatorkomponente hergestellt ist.

7. Milchflasche nach einem der vorherigen Ansprüche.

8. Kosmetikverpackung nach einem der Ansprüche 1 bis 6.

9. Haushaltsverpackungen nach einem der Ansprüche 1 bis 6.

## Revendications

1. Bouteille multicouche dans laquelle la couche externe est préparée essentiellement à partir d'une résine de polyéthylène produite avec un composant catalyseur métallocène, ladite couche externe ayant un brillant d'au moins 40, et dans laquelle la couche interne est préparée avec un système catalyseur métallocène qui est identique à ou différent de celui de la couche externe, dans laquelle la résine de polyéthylène de la couche externe a une masse volumique de 0,930 à 0,966 g/$cm^3$ et un indice de fluage MI2 de 0,5 à 2,5 g/10 min.

2. Bouteille selon la revendication 1, dans laquelle le système catalyseur métallocène utilisé pour préparer la couche externe est à base d'un composant catalyseur dichlorure d'éthylène-bisindényl- ou d'éthylène-bistétrahydroindényl-zirconium.

3. Bouteille selon l'une quelconque des revendications 1 et 2, dans laquelle la résine de polyéthylène de la couche externe a une distribution des masses moléculaires de 2 à 7.

4. Bouteille selon l'une quelconque des revendications précédentes, qui est produite par moulage par soufflage d'une paraison extrudée ou coextrudée.

5. Bouteille selon l'une quelconque des revendications précédentes, dans laquelle chaque couche est identique ou différente.

6. Bouteille selon l'une quelconque des revendications précédentes, dans laquelle les deux couches externe et interne sont produites avec un composant catalyseur métallocène dichlorure d'éthylène-bisindényl- ou éthylène-bistétrahydroindényl-zirconium.

7. Bouteilles de lait selon l'une quelconque des revendications précédentes.

8. Conditionnement de cosmétique selon l'une quelconque des revendications 1 à 6.

9. Conditionnement ménager selon l'une quelconque des revendications 1 à 6.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 756931 A
- WO 9832601 A
- WO 9910430 A
- WO 9521743 A
- WO 9702294 A
- US 5788926 A
- WO 9619527 A
- EP 0881237 A
- EP 0619325 A
- WO 9635729 A


### Non-patent literature cited in the description


- *Modern Plastic International,* August 1993, 45